# EUROPEAN PATENT SPECIFICATION

(11) **EP 2 668 603 B1**
(45) Date of publication and mention of the grant of the patent: **27.04.2016**
(21) Application number: 12739497.1
(22) Date of filing: 25.01.2012
(51) Int. Cl.: G06F 17/40, G06F 15/16, G06F 17/30, H04L 29/08

(54) **CACHING RESOURCES**
RESSOURCENZWISCHENSPEICHERUNG
RESSOURCES DE MISE EN ANTÉMÉMOIRE

(30) Priority: 26.01.2011 US 201113014689
(43) Date of publication of application: 04.12.2013
(73) Proprietor: Google Inc., Mountain View, CA 94303 (US)
(72) Inventor: APPLETON, Benjamin C., Summer Hill, New South Wales 2130 (AU)
(74) Representative: Grant, David Michael
(86) International application number: PCT/US2012/022577
(87) International publication number: WO 2012/103237

(56) References cited:
- EP-A2- 0 618 708
- WO-A1-97/06485
- US-A1- 2007 079 072
- US-A1- 2008 209 040
- US-A1- 2010 098 256
- LEI FANG ET AL: "A New Dynamic Tile Caching Method for WebGIS", MULTIMEDIA TECHNOLOGY (ICMT), 2010 INTERNATIONAL CONFERENCE ON, IEEE, PISCATAWAY, NJ, USA, 29 October 2010 (2010-10-29), pages 1-4, XP031797665, ISBN: 978-1-4244-7871-2

## Description

### BACKGROUND

This specification relates generally to caching resources in a network.

In a typical interactive mapping system, tiles of map data are served over a network through multiple intermediary servers. Tiles may be cached on each of the intermediary servers. For a tile that has been cached, subsequent requests for that tile result in a local copy of the cached tile being served to a client.

In "A New Dynamic Tile Caching Method for WebGIS" (International Conference on Multimedia Technology, 29-31 Oct. 2010, ), Lei Fang et al disclose in the context of an interactive mapping system, when there is a map tile updated in the map server, concerned cache servers are informed and take the updated tile into account. However, it does not address the coexistence of different versions of map tiles.

### SUMMARY

This specification describes technologies relating to caching resources in an interactive mapping system.

In general, a directory structure is created by the interactive mapping system to control caching of tiles. Clients traverse the directory structure by making subsequent requests for resource locators at each level of the directory structure to ultimately obtain tiles corresponding to a set of map coordinates. When a new tile is added to the system, only ancestor nodes of the new tile are updated. Thus, while new tiles and their respective ancestor nodes are uncached, unchanged tiles remain cached.

In general, one innovative aspect of the subject matter described in this specification can be embodied in methods that include the actions of receiving, from a first client, a request for a root node of a directory structure in which resource locators for nodes are generated based on a hash of resource locators of respective one or more descendant nodes, wherein requests for parent nodes generate responses containing resource locators of respective one or more descendant nodes, and wherein leaf nodes are associated with corresponding resource locators for tiles in an interactive mapping system; serving, to the first client, a first configuration of tiles, wherein each intermediate node and each tile is served as a cacheable resource; receiving an indication of a new node added to the directory structure, the new node corresponding to a new version of a tile; adding to the directory structure one or more new ancestor nodes of the new node; receiving, from a second client, a request for the root node; and serving, to the second client, a second configuration of tiles including the new node, while continuing to serve the first configuration of tiles to one or more other clients that requested the root node before the one or more new ancestor nodes of the new node were added. Other embodiments of this aspect include corresponding systems, apparatus, and computer programs, configured to perform the actions of the methods, encoded on computer storage devices.

These and other embodiments can each optionally include one or more of the following features. Adding one or more new ancestor nodes of the new node includes switching from serving the first configuration of tiles to serving the second configuration of tiles after a new root node is added. Switching to serving the second configuration of tiles includes swapping a root node indicator from the root node to the new root node. A response containing resource locators of one or more descendant nodes of the new root node is served in response to receiving, from a second client, a request for the root node. The resource locators for tiles include a version. The second configuration of tiles is served with an indication that one or more tiles are cacheable. Updating resource locators for each of one or more ancestor nodes of the new node comprises adding to the directory structure the one or more ancestor nodes for the new node. The resource locators for tiles include map coordinates. The resource locators for tiles include a hash of tile data. Resource locators for the root node and each parent node are generated by a hash function. Resource locators for the root node and each parent node are generated by a hash of a concatenation of resource locators of one or more respective descendant nodes. A separate directory structure is generated for each of one or more zoom levels in the interactive mapping system. The directory structure is a quadtree or a B-tree. The method of claim 1, where the indication that the tile is cacheable comprises an HTTP header.

Particular embodiments of the subject matter described in this specification can be implemented so as to realize one or more of the following advantages. The directory structure can reduce latency for client devices and reduce load on servers by increasing a cache hit rate. New tiles can be served without simultaneously invalidating all caches for all users. Tiles need not be specified by predictable uniform resource locators ("URLs"), and can instead be specified by arbitrary URLs, such as those based on tile contents. URLs based on tile contents result in identical URLs being assigned to visually identical tiles, further increasing cache hit rates throughout the system.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a diagram of a graphical user interface of an example interactive mapping system.
FIG. 2 is a diagram of an example network environment for serving map data.
FIG. 3 is a diagram of an example directory structure for caching tiles.
FIG. 4 is a sequence diagram of an example client interaction with the interactive mapping system.
FIG. 5 is a diagram of an example update of the directory structure for caching tiles.
FIG. 6 is a sequence diagram of an example client interaction with the interactive mapping system after a tile is updated.

Like reference numbers and designations in the various drawings indicate like elements.

### DETAILED DESCRIPTION

Interactive mapping systems provide access to vast amounts of map data, particularly when provided in a networked environment, e.g., the Internet. The interactive mapping systems can store the map data in a distributed storage environment and serve the map data to client devices over the network.

Client devices (e.g., data processing apparatus such as personal computers, smart phones, tablet computers, or laptop computers) can request map data for a geographic region of interest. The map data provided can be defined by a viewport, for example, which can be an element of the interactive mapping system graphical user interface (GUI). The viewport can be different shapes, e.g., rectangular or square, and can present map data of a particular geographic region. In response to the request for map data, one or more service providers can send the client device map data, which may be in the form of an image.

The client device then displays the map data or image in the viewport of the GUI (e.g., using a client web browser application). Map data can include map images (e.g., political or topographic map images), satellite images, business locations, popular landmarks, driving or walking directions, and vector graphics defining paths and regions overlaid on map images. Map data can also include various layers of related data, for example, a layer illustrating volcanoes in the Pacific Ocean or current traffic conditions.

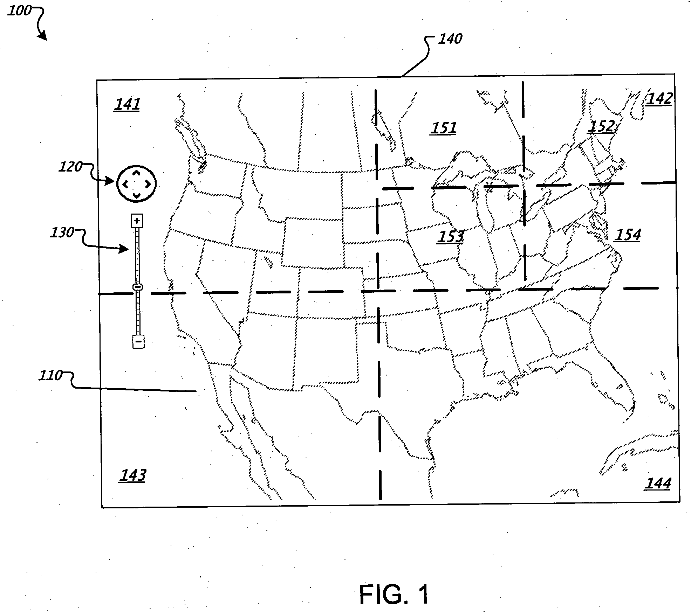

FIG. 1 is a diagram of a graphical user interface of an example interactive mapping system 100. The interactive mapping system 100 contains a map image 110 showing a map of a portion of the earth's surface. The region displayed by the interactive mapping system 100 is defined by a viewport 140.

The interactive mapping system can include interface elements to control operation of the map, such as a panning control 120, a zoom control 130, a tilt control (not shown), or a rotation control (not shown). In some implementations, the user specifies a pan command by using an input device, e.g., a mouse, to drag the map image or manipulate the panning control 120. In some other implementations, the user specifies a pan command by dragging a finger across the screen of a touchscreen device. The interactive mapping system can provide data at multiple zoom levels (e.g., in response to a user input to the zoom control 130). Each subsequent zoom level provides more detail corresponding to a smaller geographic region.

Map data servers can provide images of map data in the form of tiles. Tiles are images that can be combined to form a larger, composite image. For example, a tile can be a 256x256 pixel image. Four such tiles can be combined to form a 512x512 pixel image. The map image 110, for example, can be broken up and provided as four separate tiles 141, 142, 143, and 144. Tile boundaries may or may not be visible in the viewport of the client device.

The tiles provided depend upon the current zoom level of the interactive mapping system. When zooming in using the zoom control 130, map data corresponding to a region of a previously provided tile can be subsequently provided as a composite of smaller, potentially higher resolution tiles. For example, map data for the region corresponding to tile 142 can be provided in a subsequent zoom level as tiles 151, 152, 153, and 154.

Client devices can request tiles based on coordinates. The set of coordinates can be specified by the range of the user viewport. Coordinates can be latitude/longitude pairs or can be coordinates assigned by the interactive mapping system. Each tile can be referenced by a unique [x, y] pair of coordinates. For example, a client device can request tile 141 by the assigned coordinates [3, 4]. Tile 142 can be requested by assigned coordinates [4, 4]. Tile 143 can be requested by coordinates [3, 5], and tile 144 can be requested by coordinates [4, 5].

Particular tiles can be requested by including their coordinates in a URL of an HTTP request. For example, tile 141 can be requested by appending "?x=3&y=4" to a resource locator (e.g. a URL) for the interactive mapping service. In mapping systems with multiple zoom levels, tiles can also be specified by a zoom level, z. Thus, at zoom level 3, a client device can request tile 141 with x=3, y=4, and z=3, formulated as an HTTP request as "?x=3&y=4&z=3". Tile 151 (which is a smaller tile provided at a higher zoom level than tile 141) can be requested by specifying a higher zoom level, such as "?x=3&y=4&z=4".

As an interactive mapping system gathers more map data, tiles in the system can be updated. The updated information can, for example, reflect additional road information, higher resolution satellite imagery, or corrections to errors in existing map data. Tiles in the system can be assigned a version number to distinguish tiles with newer or older information. Client devices can request tiles of a specific version number, v, in an HTTP request. For example, version 2 of tile 141 at zoom level 3 could be requested by appending "?x=3&y=4&z=3&v=2" to a resource locator (e.g. a URL) for the interactive mapping service.

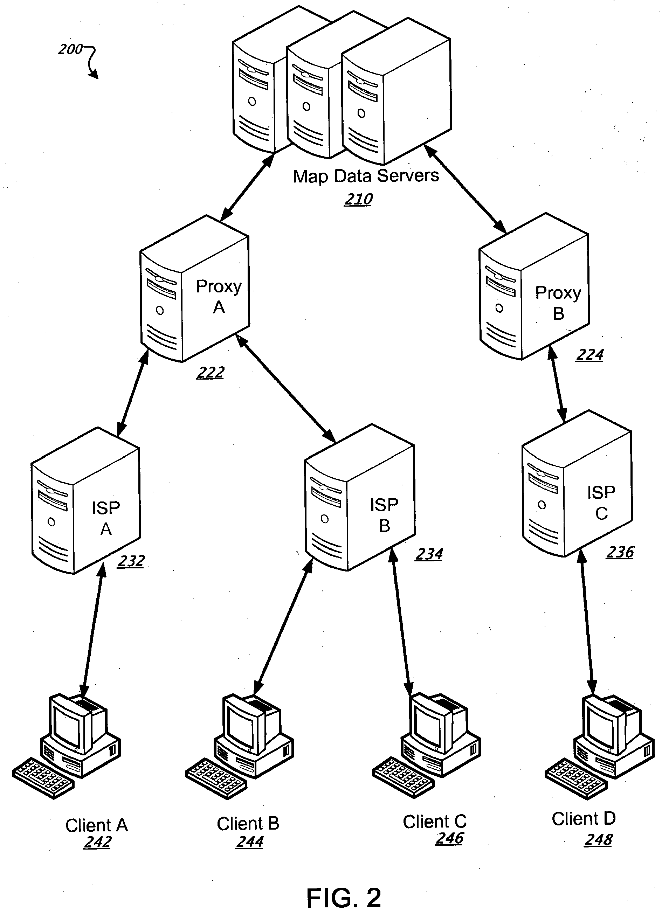

FIG. 2 is a diagram of an example network environment 200 for serving map data. Serving map data over a network often involves communication between multiple servers in a series of requests. Map data ultimately served to a client device can be routed through multiple intermediary proxy servers or Internet service providers (ISPs). A proxy server is a server that mediates requests from clients to other servers in a network. An ISP provides client devices access to other servers on the network, which can be provided by a dial-up connection through a public switched telephone network, a digital subscriber line (DSL), cable broadband, WiFi, or any other network connection technology.

Specifically, the example network environment 200 includes map data servers 210. Map data servers 210 receive requests from client devices 242, 244, 246, and 248, respectively. The map data servers 210 serve map data back to the corresponding client devices. The requests and provided map data can be routed through proxy servers 222 and 224 and ISPs 232, 234, and 236 before reaching map data servers 210.

The provided map data can be cached by intermediary devices between the map data servers 210 and the client devices 242, 244, and 246. Client devices can also cache map data on a local storage device. Caching a resource on a network (e.g. map data) means that a device stores a local copy of the resource corresponding to a given resource locator and retrieves the copy of the resource on subsequent requests for the same network location instead of requesting the resource directly. Consequently, upon the next request for the same resource locator (from the same or a different client device), the copy of the resource is served instead of requesting the resource again from the original server.

Caching network resources can reduce latency experienced by client devices by reducing the number of intermediate requests for a resource, and can also reduce load on upstream servers by reducing the number of requests for the original resource. In some implementations, a server will not subsequently modify a resource that has been identified as a cacheable resource. Cached resources that are subsequently modified introduce the possibility of client devices receiving inconsistent data.

In some implementations, a server identifies a resource that should be cached by including an appropriate header in an HTTP response providing the resource. The header includes a field indicating that servers forwarding the resource should store a copy of the resource and serve the copy on subsequent requests for the same resource. The header can also identify a time period after which the cached resource will expire, at which point the original resource should be requested again by the intermediate servers. Alternatively, a server can indicate with the HTTP header that a resource should never be cached.

For example, map data servers 210 can indicate that a particular tile should be cached. When the tile is requested by a client device (e.g., client device 244), the tile will be provided to proxy server A 222, which will provide the tile to ISP B 234. The ISP B 234 will then provide the tile to the requesting client device. When proxy server A 222 receives the tile from map data servers 210, the proxy server A 222 reads the HTTP header and determines that the tile should be cached. Proxy server A 222 then creates a local copy of the tile to be served on subsequent requests for that tile. For example, if proxy server A 222 receives a subsequent request for the same tile, proxy server A 222 responds by serving the stored local copy of the tile rather than requesting the tile from map data servers 210. ISPs 232, 234, and 236 cache the tile in the same way by reading the HTTP header of received tiles. Client devices 242, 244, 246, and 248 can also cache a local copy of the tile, which will be read from a local storage device rather than requesting the tile from their respective ISPs.

"Cache hits" refer to instances of a client device or an intermediate server finding a locally stored copy of a cached resource. "Cache misses," on the other hand, refer to instances where no locally stored copy of a resource is found on the client device or on any of the intermediate servers, or when a locally stored copy has expired or is otherwise invalid. Cache misses require requesting the original resource from the original server, e.g., map data servers 210.

Because cache hits reduce latency and decrease load on servers, an interactive mapping system can attempt to maximize the number of cache hits and minimize the number of cache misses on requests for resources such as tiles. To improve caching performance, an interactive mapping system can implement a separate directory structure used for serving and caching tiles.

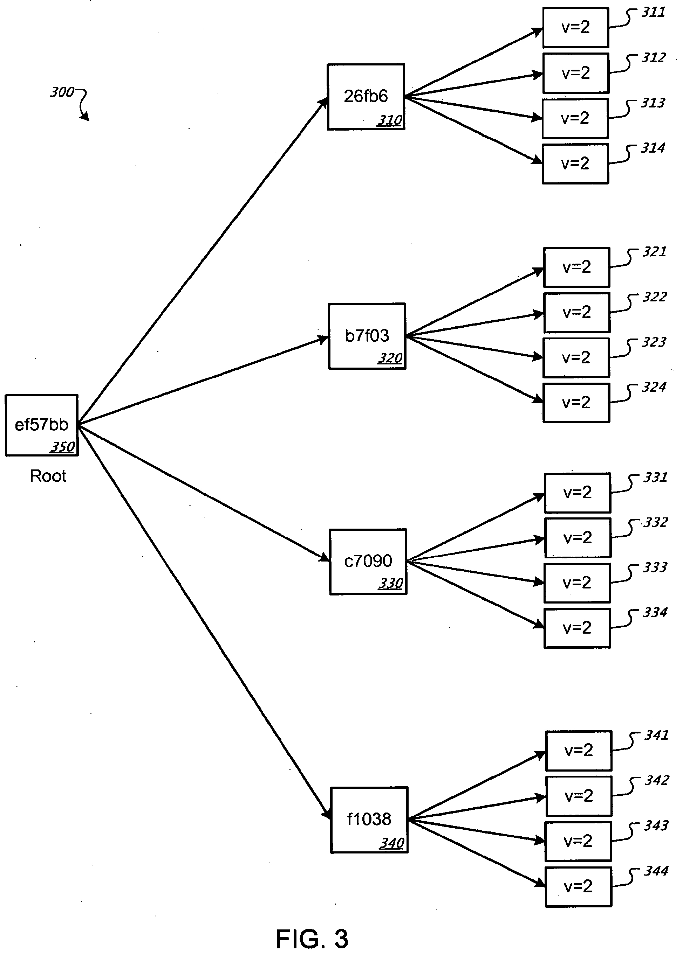

FIG. 3 is a diagram of an example directory structure 300 for caching tiles. The example directory structure is implemented as a quadtree, in which each node of the directory structure has four child nodes. Tiles in the interactive mapping system can also be organized in a quadtree structure, but the example directory structure for caching shown in FIG. 3 is not necessarily related to the structure of the interactive mapping system and can be implemented as an entirely separate structure. Furthermore, the directory structure in FIG. 3 could be implemented as another kind of tree, e.g., as a B-tree.

The leaf nodes shown in FIG. 3 (e.g., nodes 311-314, 321-324, 331-334, and 341-344) correspond to individual tile versions in the interactive mapping system. Each leaf node contains information required to retrieve the corresponding tile. For example, a leaf node could contain the information, [x=2, y=3, z=2, v=2], for map coordinates x and y, zoom level z, and tile version v, which could be used to request a tile with a URL containing "?x=2&y=3&z=2&v=2". In response to a URL request for this tile, the interactive mapping system can provide the corresponding tile data. In addition, leaf nodes of the directory structure can contain per-tile data (e.g., locations of businesses within the tile region). For brevity, however, only the version number of each tile is shown in FIG. 3.

In some implementations, a separate directory structure is generated for each zoom level of the interactive mapping system. Thus, all tiles corresponding to the leaf nodes of the example directory structure shown in FIG. 3 are at the same zoom level in the interactive mapping system. The example directory structure contains only 16 leaf nodes, and therefore only two levels. However, an interactive mapping system can contain millions of tiles at a given zoom level, and thus the directory structure would accordingly contain more levels than the example directory structure shown in FIG. 3.

The intermediate nodes 310, 320, 330, and 340 contain a hash of the contents of their respective child nodes. For example, node 310 can contain a hash of the concatenation of the contents of leaf nodes 311, 312, 313, and 314. A hash is a string of characters generated by a hash function. A hash function converts input data into a hash, which is a sequence of hash characters. Each hash character can correspond to a bit string and can be represented in various character encodings, such as hexadecimal or Base64. Similarly, the root node 350 contains a hash of the concatenation of its child nodes, nodes 310, 320, 330, and 340.

In some implementations, hashes are also used to assign identifying URLs for map tiles. When the identifying URLs are maintained in a directory structure such as the one shown in FIG. 3, the URLs of the map tiles do not need to be predictable (e.g. "x=3&y=4" for [x=3, y=4]) and can instead be arbitrary. The URL of each map tile can then be generated by a hash of the image data in each map tile, instead of a predictable concatenation of coordinates, version number, and zoom level. When URLs are thus generated by a hash of image data, visually identical tiles (e.g., solid color tiles for oceans, uninhabited regions, or regions for which data is unavailable) are assigned identical URLs, which further increases cache hits. Visually identical tiles particularly increase cache hits on the client device itself, eliminating HTTP requests to a server.

The contents of each node in the directory structure can be used to access that node as a network resource location. For example, the hash contained in node 310 can be used as a URL for a client device to access node 310. The URL request for node 310 can be a URL that includes "?id=26fb6", where "id" represents the hash identifier. In response to a request for an intermediate node, the interactive mapping system can provide a list of that node's child nodes. For example, in response to a URL request for node 310, the interactive mapping system could provide identifying information for the child nodes of node 310, which are leaf nodes 311, 312, 313, and 314. The identifying information can include the x and y coordinates, the zoom level, and the version number of each respective tile.

When the contents of a child node changes, the contents of the child node's parent node will also change (because each intermediate node contains a hash of a concatenation of the contents of its child nodes). Therefore, changes in the directory structure get propagated up all the way to the root node. In other words, the root node changes whenever any child node in the directory structure changes.

In some implementations, because the leaf nodes of the directory structure are cacheable resources (e.g. map tiles), the contents of individual child nodes do not change. Instead, a new child node is created and associated with an appropriate parent node. Therefore, requests for an old map tile can still result in access to the old map tile, even after the map tile has been updated. Accessing the root node thus provides a snapshot of tiles of the world because only branches of the directory structure reachable from the accessed root node will be subsequently traversed by a client. Newly added nodes are reachable only after re-requesting the root node.

When a client device loads the user interface of the interactive mapping system (e.g. the user interface as shown in FIG. 1), the viewport identifies the map tiles that should be loaded. In this situation, the interactive mapping system can immediately provide identifying information for URLs of the most recently updated tiles, such as the x and y coordinates, zoom level, and version number, as well as URLs for all ancestor nodes. The tiles are served through intermediate proxy servers and ISPs and are cached, and subsequent requests for the cached tiles result in cache hits.

However, in some implementations (e.g. when a client device does not indicate a region of interest by a viewport), the interactive mapping system must be interrogated in order for the client device to obtain identifying information about which version of map tiles should be requested.

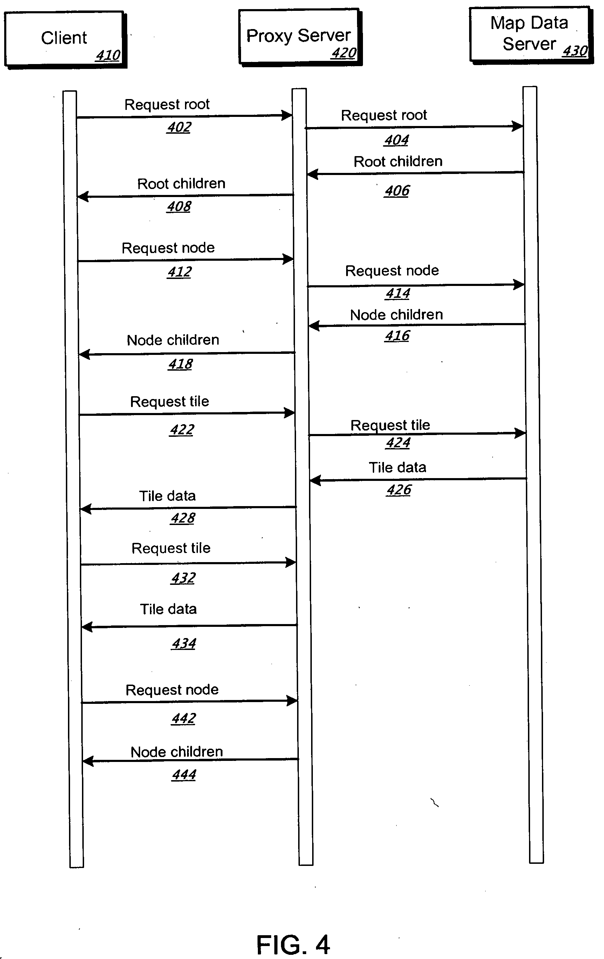

FIG. 4 is a sequence diagram of an example client interaction with the interactive mapping system. The client device interacts with the interactive mapping system through a proxy server to obtain identifying information about which version of map tiles should be requested.

The client device 410 requests the root of the directory structure for caching tiles 402. In some scenarios where a separate directory structure is maintained for each zoom level, the client device specifies a zoom level in its request for the root. The proxy server 420 forwards the request 404 to the map data server 430. In response to the request, the map data server 430 provides a list of the root's child nodes 406, which the proxy server 420 forwards 408 to the client device 410.

For example, in response to a request for the root node, the client device receives a list of child nodes [[26fb6, b7f03], [c7090, f1038]] when requesting a tile at x=1 and y=2. The client can specify which of the four child nodes should be subsequently requested by a pair of indices, e.g., [0, 1] or [1, 1]. To identify which child of the root node should be subsequently requested, the client device uses the x and y coordinates of the currently requested tile. In some implementations, bits in the x and y coordinates identify the appropriate child of the root node. The identifying bits correspond to the level of the current node in the directory structure. For example, because the root node is at the first level of the directory structure, the first bits (i.e. the most significant bits) of coordinates x=1 (binary "01") and y=2 (binary "10") identify the child that should be subsequently requested, yielding 0 and 1 respectively. Therefore, the client device would next request the node identified by [0, 1] in the list of returned child nodes, which is "b7f03".

The client device 410 makes a request for a node 412 using the node identifier "b7f03". In some implementations, the request is a URL generated by appending the node identifier to the map service URL (e.g. "http://example.com/map?node=b7f03"). The proxy server 420 forwards the request 414 to the map data server 430. In response to the request, the map data server 430 provides a list of the node's children 416, which the proxy server 420 forwards 418 to the client device 410.

The client device again uses the x and y coordinates of the tile being requested to identify which of the child nodes should be requested. In this example, the children of the requested nodes are leaf nodes containing identifying information for map tiles. For example, the client device could receive a list of nodes [[x=0&y=2&z=2&v=2, x=0&y=3&z=2&v=2], [x=1&y=2&z=2&v=2, x=1&y=3&z=2&v=2]]. The client device identifies the appropriate tile identifier information using the x and y coordinates being requested. Because these are leaf nodes, the last (e.g. least significant) bits of the tile coordinates are used to identify the appropriate tile. In this case, the least significant bits of x=1 (binary "01") and y=2 (binary "10") are 1 and 0 respectively, so the node with identifier "x=1&y=2&z=2&v=2" is identified.

The client device makes a request for the map tile 422 using the tile identifier "x=1&y=2&z=2&v=2". In some implementations, the request is a URL generated by appending the tile identifier to the map service URL (e.g. "http://example.com/map? x=1&y=2&z=2&v=2"). The proxy server 420 forwards the request 424 to the map data server 430. In response to the request, the map data server 430 provides the tile data 426, which the proxy server 420 forwards 428 to the client device 410.

The map data server 430 can include appropriate headers with responses so that map resources requested by clients are cached. After the proxy server 420 receives tile data 426, subsequent requests for the same URL will result in cache hits. If the client device 410 requests the same tile URL 432, the proxy server will respond with a cached copy of the tile data 434. In some implementations, the tile data is also cached on the client device 410, and thus the client device can retrieve a cached copy of the tile data without requesting the tile data from the proxy server 420.

Similarly, if the client device 410 requests the URL of a previously requested node 442, the proxy server will respond with a cached copy of the node data 444. In some implementations, only the root node is never cached. Cached resources can be served to multiple different clients, so if another client different from client 410 requested the URL of a previously requested node (e.g. request 442), the proxy server 420 would respond with a cached rather than requesting the original data from the map data server 430.

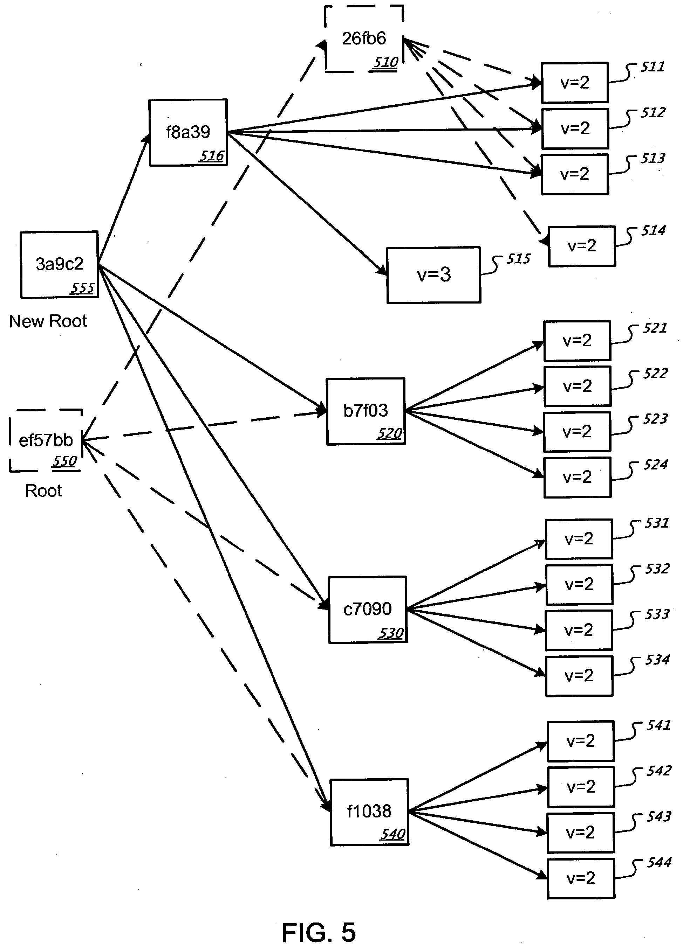

FIG. 5 is a diagram of an example update of the directory structure for caching tiles. Because each intermediate node contains a hash of the contents of its respective child nodes, updates to child nodes are propagated up the directory structure, changing each ancestor along the way. Updates to any child node will thus update the root node.

The tile corresponding to leaf node 514 is updated in the interactive mapping system. A new leaf node 515 is created, corresponding to version 3 of the tile. As a result of the update, a new parent node 516 is created, containing a hash of the contents of its child nodes 511, 512, 513, and new node 515. As a result of new parent node 516, a new root node 555 is created, containing a hash of the contents of its child nodes 516, 520, 530, and 540.

In some implementations, the old root 550 and old parent node 510 are still accessible by their URLs for a specified time period after the new root 555 is created. However, the map data server immediately identifies new root 555 in response to requests for the root node. After a specified time period has passed, the map data server can carry out a garbage collection process that will erase root node 550 and node 510. However, if node 510 has been cached on an intermediate proxy server, requests by client devices for this node will continue to generate cache hits until the root node is requested again.

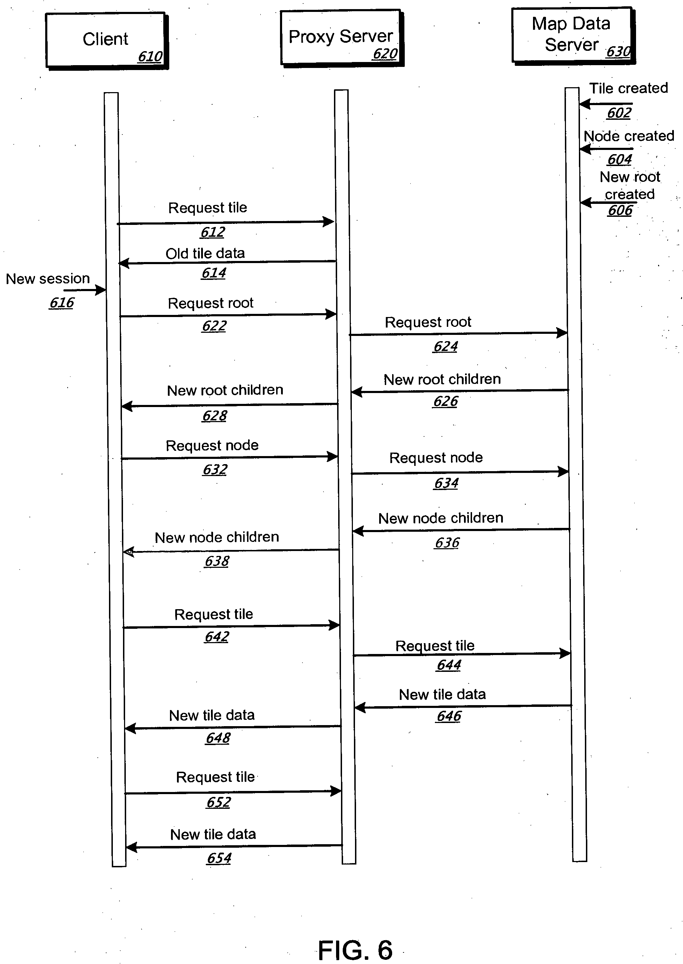

FIG. 6 is a sequence diagram of an example client interaction with the interactive mapping system after a tile is updated. Until the client device re-requests the root node, the client device will continue to receive cached copies of requested tiles.

New tile data becomes available and a new version of a tile is created 602, resulting in a new parent node being created 604, and a new root node being created 606. In some implementations, new tiles versions are added rather than new tiles replacing old tiles.

The client device requests a tile at a specified set of coordinates 612. Though a new version of the tile at the specified coordinates is available, the client device receives a cached copy of old tile data 614. Requesting client devices continue to receive the cached version of the old tile until a request for the root node is received from a client device.

In some implementations, the client device re-requests the root node when a new session is started 616. The root node can also be re-requested if the cached entries on proxy server 620 expire. After requesting the root node, the client device will send a series of requests to traverse the directory structure in order to obtain a resource locator for a requested tile.

The client device requests the root node 622 in connection with a requested tile located at coordinates [x, y]. The proxy server 620 forwards the request 624 to the map data server 630, and the map data server 630 responds with a list of the new root's child nodes 636, which the proxy server 620 forwards 638 to the client device 610. The client identifies which of the root's child nodes should be subsequently requested by using the most significant bits of the x and y coordinates. Among the new root's child nodes will be a resource locator for a new intermediate node created after and in response to the addition of a node for the new tile.

The client requests the new node 632. The proxy server 620 forwards the request to the map data server 630. In response to the request, the map data server 630, provides a list of the node's children 636, which the proxy server 620 forwards 648 to the client device 610. The client device again uses the x and y coordinates of the tile being requested to identify which of the child nodes should be requested. The client device makes a request for the tile 642, which the proxy server 620 forwards 644 to the map data server 630. In response to the request, map data server 630 provides the new tile data 646, which the proxy server 620 forwards 648 to the client device 610. Subsequent requests for the tile at coordinates [x, y] (e.g. request 652) will result in the proxy server 620 responding with a cached copy of new tile data 654.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively or in addition, the program instructions can be encoded on an artificially-generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A method for caching tiles in an interactive mapping system (200) comprising:
receiving, from a first client, a request (402) for a root node of a directory structure in which resource locators for nodes are generated based on a hash of resource locators of respective one or more descendant nodes, wherein requests for parent nodes generate responses containing resource locators of respective one or more descendant nodes, and wherein leaf nodes are associated with corresponding resource locators for tiles in an interactive mapping system;
serving, to the first client, a first configuration of tiles (428, 434), wherein each intermediate node and each tile is served as a cacheable resource; receiving an indication of a new node added to the directory structure (604, 606), the new node corresponding to a new version of a tile;
adding to the directory structure one or more new ancestor nodes of the new node;
receiving, from a second client, a request (622) for the root node; and
serving, to the second client, a second configuration of tiles including the new node (648, 654), while continuing to serve the first configuration of tiles to one or more other clients that requested the root node before the one or more new ancestor nodes of the new node were added.

2. The method of claim 1, wherein adding one or more new ancestor nodes of the new node comprises switching from serving the first configuration of tiles to serving the second configuration of tiles after a new root node is added.

3. The method of claim 2, wherein switching to serving the second configuration of tiles comprises swapping a root node indicator from the root node to the new root node.

4. The method of claim 3, further comprising serving, in response to receiving, from a second client, a request for the root node, a response containing resource locators of one or more descendant nodes of the new root node.

5. The method of claim 1, where the resource locators for tiles include a version.

6. The method of claim 1, further comprising serving the second configuration of tiles with an indication that one or more tiles are cacheable.

7. The method of claim 1, where updating resource locators for each of one or more ancestor nodes of the new node comprises adding to the directory structure the one or more ancestor nodes for the new node.

8. The method of claim 1, where the resource locators for tiles include map coordinates.

9. The method of claim 1, where the resource locators for tiles include a hash of tile data.

10. The method of claim 1, where resource locators for the root node and each parent node are generated by a hash function.

11. The method of claim 10, where resource locators for the root node and each parent node are generated by a hash of a concatenation of resource locators of one or more respective descendant nodes.

12. The method of claim 1, further comprising generating a separate directory structure for each of one or more zoom levels in the interactive mapping system.

13. The method of claim 1, where the directory structure is a quadtree or a B-tree.

14. The method of claim 1, where the indication that the tile is cacheable comprises an HTTP header.

15. A system (200) comprising:
one or more computers; and
a computer-readable storage device storing instructions that, when executed by the one or more computers, cause the one or more computers to perform the method of any of claims 1 to 14.

## Patentansprüche

1. Verfahren zum Zwischenspeichern von Kacheln in einem interaktiven Kartierungssystem (200), umfassend:
das Empfangen einer Anforderung (402) für einen Wurzelknoten einer Verzeichnisstruktur von einem ersten Client, in welcher Ressourcenanzeiger für Knoten basierend auf einem Hash an Ressourcenanzeigern der(s) jeweiligen einen oder mehreren Nachfolgeknoten erzeugt werden, wobei die Anforderungen von Elternknoten Antworten erzeugen, die Ressourcenanzeiger von jeweils einem oder mehreren Nachfolgeknoten enthalten, und wobei Blattknoten mit entsprechenden Ressourcenanzeigern für Kacheln in einem interaktiven Kartierungssystem assoziiert sind;
das Ausgeben einer ersten Konfiguration von Kacheln (428, 434) an den ersten Client, wobei jeder Zwischenknoten und jede Kachel als cachefähige Ressource bedient wird;
das Empfangen eines Hinweises über einen neuen Knoten, welcher zur Verzeichnisstruktur (604, 606) hinzugefügt wird, wobei der neue Knoten einer neuen Version einer Kachel entspricht;
das Hinzufügen eines oder mehrerer neuer Vorgängerknoten des neuen Knotens zur Verzeichnisstruktur;
das Empfangen einer Anforderung (622) für den Wurzelknoten von einem zweiten Client; und
das Ausgeben einer zweiten Konfiguration von Kacheln einschließlich des neuen Knotens (648, 654) an den zweiten Client, während das Ausgeben der ersten Konfiguration von Kacheln an einen oder mehrere andere Clients fortgesetzt wird, welche den Wurzelknoten angefordert hatten, bevor der eine oder die mehreren neuen Vorgängerknoten des neuen Knotens hinzugefügt wurde(n).

2. Verfahren nach Anspruch 1, wobei das Hinzufügen von einem oder mehreren neuen Vorgängerknoten des neuen Knotens, das Umschalten vom Ausgeben an die erste Konfiguration von Kacheln in das Ausgeben an die zweite Konfiguration von Kacheln beinhaltet, nachdem ein neuer Wurzelknoten hinzugefügt wird.

3. Verfahren nach Anspruch 2, wobei ein Umschalten für ein Ausgeben an die zweite Konfiguration von Kacheln, ein Austauschen des Wurzelknoten-Indikators vom Wurzelknoten zum neuen Wurzelknoten beinhaltet.

4. Verfahren nach Anspruch 3, welches zusätzlich, in Reaktion auf ein Empfangen einer Anforderung von einem zweiten Client für den Wurzelknoten, das Ausgeben einer Antwort umfasst, welche Ressourcenanzeiger aus einem oder mehreren Nachfolgeknoten des neuen Knotens beinhaltet.

5. Verfahren nach Anspruch 1, bei dem die Ressourcenanzeiger für Kacheln eine Version beinhalten.

6. Verfahren nach Anspruch 1, welches zusätzlich das Ausgeben eines Indikators an die zweite Konfiguration von Kacheln, dass eine oder mehrere Kacheln cachefähig sind, umfasst.

7. Verfahren nach Anspruch 1, wobei die Aktualisierung von Ressourcenanzeigern für jeden von dem einen oder mehreren Vorgängerknoten des neuen Knotens, ein Hinzufügen des einen oder mehrerer Vorgängerknoten des neuen Knotens zur Verzeichnisstruktur umfasst.

8. Verfahren nach Anspruch 1, wobei die Ressourcenanzeiger für Kacheln Kartenkoordinaten umfassen.

9. Verfahren nach Anspruch 1, wobei die Ressourcenanzeiger für Kacheln einen Hash der Kachel-Daten enthalten.

10. Verfahren nach Anspruch 1, wobei Ressourcenanzeiger für den Wurzelknoten und jeden Elternknoten über eine Hash-Funktion erzeugt werden.

11. Verfahren nach Anspruch 10, wobei Ressourcenanzeiger für den Wurzelknoten und jeden Elternknoten über einen Hash einer Verkettung von Ressourcenanzeigern eines oder mehrerer der jeweiligen Nachfolgeknoten erzeugt werden.

12. Verfahren nach Anspruch 1, welches zusätzlich ein Erzeugen einer separaten Verzeichnisstruktur für jede der einen oder mehreren Zoomstufen im interaktiven Kartierungssystem umfasst.

13. Verfahren nach Anspruch 1, wobei die Verzeichnisstruktur aus einer Quadtree- oder B-tree-Struktur besteht.

14. Verfahren nach Anspruch 1, wobei die Anzeige, dass die Kachel cachefähig ist, einen HTTP-Header aufweist.

15. System (200), umfassend:
einen oder mehrere Computer; und
eine computerlesbare Speichervorrichtung, welche Instruktionen speichert, die, sobald sie durch den einen oder mehrere Computer ausgeführt werden, den einen oder mehrere Computer dazu veranlassen, das Verfahren nach einem der Ansprüche 1 bis 14 durchzuführen.

## Revendications

1. Procédé de mise en antémémoire de mosaïques dans un système de cartographie interactif (200), comprenant les étapes ci-dessous consistant à :
recevoir, en provenance d'un premier dispositif client, une demande (402) concernant un noeud racine d'une structure de répertoire dans laquelle des localisateurs de ressources pour des noeuds sont générés sur la base d'un hachage de localisateurs de ressources d'un ou plusieurs noeuds descendants respectifs, dans lequel des demandes concernant des noeuds parents génèrent des réponses contenant des localisateurs de ressources d'un ou plusieurs noeuds descendants respectifs, et dans lequel des noeuds feuilles sont associés à des localisateurs de ressources correspondants pour des mosaïques dans un système de cartographie interactif ;
desservir, au premier dispositif client, une première configuration de mosaïques (428, 434), dans lequel chaque noeud intermédiaire et chaque mosaïque sont desservis sous la forme d'une ressource pouvant être mise en antémémoire ;
recevoir une indication d'un nouveau noeud ajouté à la structure de répertoire (604, 606), le nouveau noeud correspondant à une nouvelle version d'une mosaïque ;
ajouter, à la structure de répertoire, un ou plusieurs nouveaux noeud ancêtres du nouveau noeud ;
recevoir, en provenance d'un second dispositif client, une demande (622) concernant le noeud racine ; et
desservir, au second dispositif client, une seconde configuration de mosaïques incluant le nouveau noeud (648, 654), tout en continuant à desservir la première configuration de mosaïques à un ou plusieurs autres dispositifs clients ayant demandé le noeud racine avant que ledit un ou lesdits plusieurs nouveaux noeuds ancêtres du nouveau noeud n'aient été ajoutés.

2. Procédé selon la revendication 1, dans lequel l'étape d'ajout d'un ou plusieurs nouveaux noeuds ancêtres du nouveau noeud comporte l'étape consistant à commuter de la desserte de la première configuration de mosaïques à la desserte de la seconde configuration de mosaïques, après qu'un nouveau noeud racine a été ajouté.

3. Procédé selon la revendication 2, dans lequel l'étape de commutation à la desserte de la seconde configuration de mosaïques comprend l'étape consistant à permuter un indicateur de noeud racine du noeud racine au nouveau noeud racine.

4. Procédé selon la revendication 3, comprenant en outre l'étape consistant à desservir, en réponse à la réception, à partir d'un second dispositif client, d'une demande concernant le noeud racine, une réponse contenant des localisateurs de ressources d'un ou plusieurs noeud descendants du nouveau noeud racine.

5. Procédé selon la revendication 1, dans lequel les localisateurs de ressources pour des mosaïques incluent une version.

6. Procédé selon la revendication 1, comprenant en outre l'étape consistant à desservir la seconde configuration de mosaïques avec une indication selon laquelle une ou plusieurs mosaïques peuvent être mises en antémémoire.

7. Procédé selon la revendication 1, dans lequel l'étape de mise à jour de localisateurs de ressources pour chacun du ou des plusieurs noeud ancêtres du nouveau noeud comprend l'étape consistant à ajouter, à la structure de répertoire, ledit un ou lesdits plusieurs noeud ancêtres pour le nouveau noeud.

8. Procédé selon la revendication 1, dans lequel les localisateurs de ressources pour des mosaïques incluent des coordonnées de carte.

9. Procédé selon la revendication 1, dans lequel les localisateurs de ressources pour des mosaïques incluent un hachage de données de mosaïques.

10. Procédé selon la revendication 1, dans lequel des localisateurs de ressources pour le noeud racine et chaque noeud parent sont générés par une fonction de hachage.

11. Procédé selon la revendication 10, dans lequel des localisateurs de ressources pour le noeud racine et chaque noeud parent sont générés par un hachage d'une concaténation de localisateurs de ressources d'un ou plusieurs noeud descendants respectifs.

12. Procédé selon la revendication 1, comprenant en outre l'étape consistant à générer une structure de répertoire individuelle pour chacun d'un ou plusieurs niveaux de zoom dans le système de cartographie interactif.

13. Procédé selon la revendication 1, dans lequel la structure de répertoire est un arbre quaternaire ou un B-arbre.

14. Procédé selon la revendication 1, dans lequel l'indication selon laquelle la mosaïque peut être mise en antémémoire comporte un en-tête de protocole HTTP.

15. Système (200) comprenant :
un ou plusieurs ordinateurs ; et
un dispositif de stockage lisible par ordinateur stockant des instructions qui, lorsqu'elles sont exécutées par le un ou plusieurs ordinateurs, amènent ledit un ou lesdits plusieurs ordinateurs à mettre en oeuvre le procédé selon l'une quelconque des revendications 1 à 14.
